# EUROPEAN PATENT APPLICATION

(11) **EP 4 691 784 A1**
(43) Date of publication of application: **11.02.2026**
(21) Application number: 23930193.0
(22) Date of filing: 24.03.2023
(51) Int. Cl.: B41J 2/195, B41J 2/01, B41J 2/095, B41J 2/125, B41J 29/38, G06F 3/12, G06F 17/18

(54) **INKJET PRINTER SYSTEM AND INKJET PRINTER ABNORMALITY SYMPTOM DETECTION METHOD**

(71) Applicant: Hitachi Industrial Equipment Systems Co., Ltd., Tokyo 101-0021 (JP)
(72) Inventor: AKASHI Dai, Tokyo 100-8280 (JP); KAWANO Takashi, Tokyo 101-0021 (JP); OTOWA Takuya, Tokyo 100-8280 (JP)
(74) Representative: MERH-IP Matias Erny Reichl Hoffmann Patentanwälte PartG mbB
(86) International application number: PCT/JP2023/011702
(87) International publication number: WO 2024/201551

(57) **Abstract**

An inkjet printer creates processed data by processing time-series data of the ink charging voltage and sends the processed data to a management server. The management server receives the processed data from the inkjet printer and detects a sign of abnormality based on the processed data. When the management server detects the sign of abnormality, it notifies a user by informing a user terminal that the sign of abnormality has been detected. The management server displays an abnormality sign analysis screen on a user terminal's display or similar device upon a user's request.

## Description

### Technical Field

The present invention relates to an inkjet printer system and an inkjet printer abnormality sign detection method.

### Background Art

An industrial inkjet printer (also referred to as "inkjet recording device") is a device that prints the date of manufacture and serial number on a product and is widely used in production lines in factories that mass-produce products. When an abnormality occurred in the inkjet printer, and the product could not be printed, because the production line of the product must be stopped, which directly affects the production number of products in the factory, it is important to properly manage the monitoring and failure of the inkjet printer, and to keep the inkjet printer running constantly.

As the prior art related to the present invention, there is a technique of Patent Document 1 and a technique of Patent Document 2. An inkjet recording device management system of Patent Document 1 uses a server that holds various information (set value data, operation information data, periodic replacement parts information, consumable information) of the inkjet recording device. The inkjet recording device management system calculates statistical information based on various information of another inkjet recording device that have occurred abnormally and calculates running notice information (Date and time of occurrence of abnormality/alarm, operational time, number of prints until abnormality/alarm occurs, maintenance information of periodic replacement parts) of one inkjet recording device that is different from the other inkjet recording device based on the statistical information and the various information.

The server device of Patent Document 2 determines whether or not a specific repair operation can be performed by the inkjet recording device based on the contents of the log related to the operation of the inkjet recording device.

### Citation list

### Patent Literature

Patent Document 1: Japanese Patent Application Laid-Open No.2019-215601
Patent Document 2: Japanese Patent Application Laid-Open No.2012-123597

### Summary of Invention

### Technical Problem

When a conventional inkjet printer determines that the printing quality is in an abnormal state that cannot be printed, such as a disturbed print, an alarm is issued, and the printing operation of the inkjet printer is stopped. If the cause is investigated and dealt with after an abnormality warning occurs, it may take tens of minutes at the earliest or several days at the latest to resolve the problem, resulting in downtime.

If it becomes possible to detect a sign of deterioration in print quality for the inkjet printer, preventive maintenance can be performed because the timing of maintenance can be known in advance, and the occurrence of downtime can be prevented.

It should be noted that the technology of Patent Document 1 displays running notice information for the same type of abnormality of one device different from the other device based on the information of the other device when an abnormality of another device occurs. Patent Document 1 is a technique for estimating the occurrence time of the same type of abnormality in one device different from the other device based on the information of the other device when an abnormality of another device occurs. In the technique of Patent Document 1, it is not performed to detect the sign of deterioration of the printing quality of the inkjet printer subject to the sign detection based on the specific data of the inkjet printer subject to the sign detection.

The present invention has been made to solve the above problem. That is, one of the objects of the present invention is to provide an inkjet printer system capable of detecting the sign of deterioration of printing quality and an inkjet printer abnormality sign detection method.

### Solution to Problem

In order to solve the above problem, the inkjet printer system of the present invention comprises:
an inkjet printer, and
a management server communicatively connected to the inkjet printer via a network,
wherein
the management server:
   collects time-series data of ink charging voltage or processed data acquired after processing the time-series data of the ink charging voltage in the inkjet printer from the inkjet printer; and
   detects an abnormality sign, which are precursors to print quality deterioration, based on at least one of the processed data acquired by processing the time-series data of the ink charging voltage by the management server and the processed data acquired from the inkjet printer.

A method of the present invention for detecting an abnormality sign in an inkjet printer using an inkjet printer and a management server communicatively connected to the inkjet printer via a network comprises:
collecting time-series data of ink charging voltage or processed data acquired after processing the time-series data of the ink charging voltage in the inkjet printer from the inkjet printer by the management server, and
detecting the abnormality sign, which are precursors to print quality deterioration, based on at least one of the processed data acquired by processing the time-series data of the ink charging voltage by the management server and the processed data acquired from the inkjet printer.

### Advantageous Effect

According to the present invention, a sign of deterioration of print quality can be detected.

### Brief Description of Drawings

[Fig. 1] FIG. 1 is a block diagram showing a system configuration example of an inkjet printer system according to an embodiment of the present invention.
[Fig. 2A] FIG. 2A is a diagram for explaining a specific configuration example of an inkjet printer.
[Fig. 2B] FIG. 2B is a diagram for explaining a hardware configuration example of a management server.
[Fig. 3] FIG. 3 is a diagram for explaining printer information.
[Fig. 4A] FIG. 4A is a diagram for explaining a data set for abnormality sign analysis.
[Fig. 4B] FIG. 4B is a diagram for explaining maintenance data.
[Fig. 5] FIG. 5 is a diagram for explaining an analysis model threshold table.
[Fig. 6A] FIG. 6A is a sequence diagram for explaining the operation of a system and the operation of a user.
[Fig. 6B] FIG. 6B is a diagram for illustrating data processing.
[Fig. 7] FIG. 7 is a flowchart showing a process flow executed by an analysis processing unit.
[Fig. 8] FIG. 8 is a flowchart showing a process flow of an attenuation rate determination process executed by the analysis processing unit.
[Fig. 9] FIG. 9 is a flowchart showing a process flow for determining the number of spikes to be occurred executed by the analysis processing unit.
[Fig. 10] FIG. 10 is a flowchart showing a process flow for determining the degree of waveform agreement executed by the analysis processing unit.
[Fig. 11] FIG. 11 is a flowchart showing a process flow of determination processing by an analysis model executed by the analysis processing unit.
[Fig. 12] FIG. 12 is a flowchart showing the process flow of the integration process of each determination executed by the analysis processing unit.
[Fig. 13] FIG. 13 is a diagram for explaining an abnormality sign analysis screen displayed by a visualization unit on the display device.

### Description of Embodiments

### <Summary of the present invention>

First, an overview of the present invention will be described in order to facilitate understanding of the present invention. In an inkjet printer, the charging voltage of the injected ink particles is controlled. By monitoring the charging status of the ink, it is possible to determine whether printing is performed accurately.

As a remote maintenance and preventive maintenance technology related to conventional inkjet printer products, there is a method based on operating hours related to periodic replacement parts, as well as historical information on operation and abnormalities.

In order to detect a sign of deterioration in printing quality of inkjet printers, it is necessary to collect and analyze sensor information (such as the charging voltage status of ink) over a long period of time that has not been collected by the conventional art.

However, the size of an internal storage of a typical inkjet printer product is very small compared to a typical personal computer. In addition, since the machine learning model required for predictive detection changes depending on the customer environment in which the inkjet printer operates, it is difficult to incorporate an analysis function into the product in advance.

From the above, it is preferable to remotely collect and store sensor data of the inkjet printer in the cloud or the like, but since the size of the sensor data is large, the line cost and storage cost for holding the data are issues.

Therefore, the inkjet printer system according to the embodiment of the present invention aims to detect a sign of print quality deterioration using inkjet printer-specific data (e.g., ink charging voltage) such as the charging state of the ink, and to achieve both the reduction of data size for collecting sensor information in the cloud and the improvement of a sign detection accuracy.

Hereinafter, embodiments of the present invention will be described with reference to the drawings. It should be noted that in all the drawings of the embodiment, the same or corresponding portions may be denoted by the same numerals.

In the following description, various information may be described by expressions such as "record", but various information may be expressed in data structures other than these. When describing identification information, expressions such as "name", "ID", and "number" are used, but these can be interchangeable. In the following description, the process may be described using the function block as the subject, but the subject of the process may be a CPU, a device (server), or a control device instead of a functional block.

### <<Embodiment>>

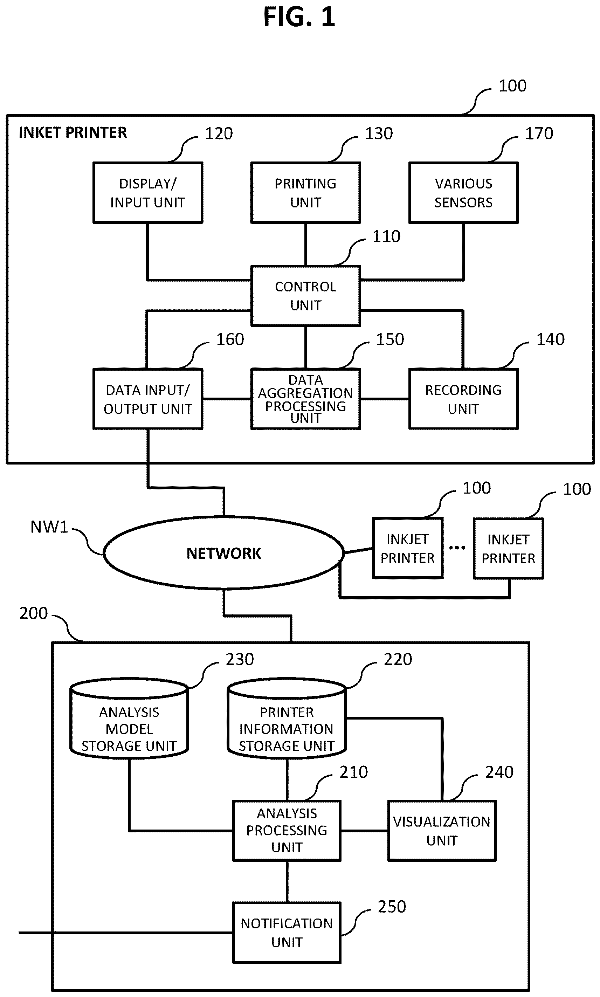

The inkjet printer system according to an embodiment of the present invention will be described. FIG. 1 is a configuration diagram that shows a system configuration example of the inkjet printer system (hereinafter referred to as the "IJP system") according to the embodiment of the present invention. The IJP system includes a plurality of inkjet printers 100 and a management server 200. The inkjet printers 100 and the management server 200 are configured to be able to transmit and receive information from each other via a network NW1.

The inkjet printer 100 comprises a control unit 110, a display / input unit 120, a printing unit 130, a recording unit 140, a data aggregation processing unit 150, a data input / output unit 160, and various sensors 170.

The control unit 110 controls each part of the inkjet printer 100. The control unit 110 collects sensor information detected by the various sensors 170 and maintenance information of the inkjet printer 100 and stores it in the recording unit 140. The control unit 110 stores the data after data processing by the data aggregation processing unit 150 in the recording unit 140.

The display / input unit 120 displays information related to the inkjet printer 100, an operation screen for inputting information, and the like, and information is input by being operated by the user.

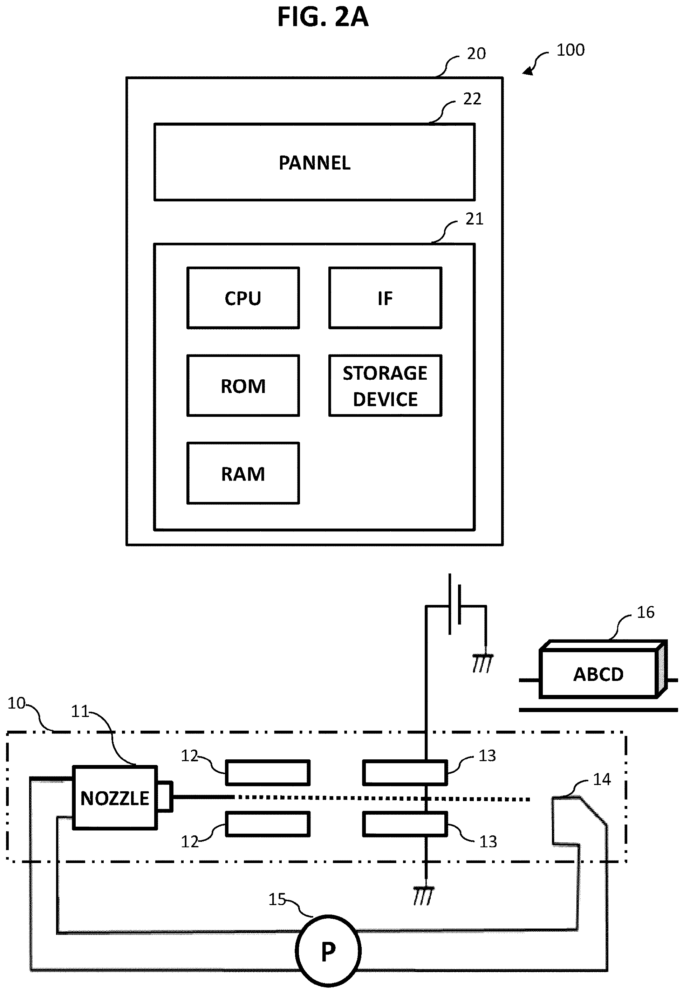

The printing unit 130 includes a nozzle head 10 (FIG. 2A) and prints on a printed object with ink.

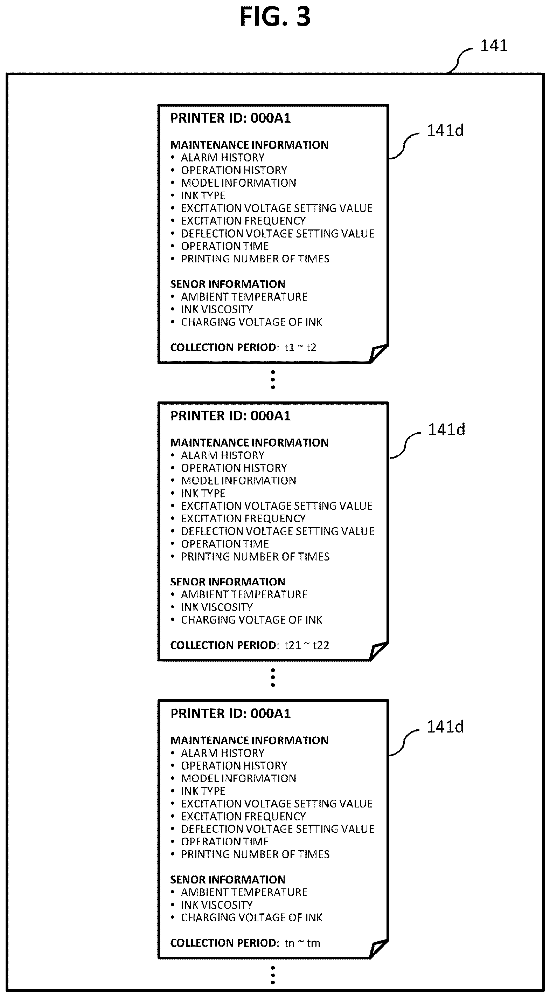

The recording unit 140 stores (stores, holds) the printer information 141 (FIG. 3) collected by the control unit 110. It should be noted details of the printer information 141 stored in the recording unit 140 will be described later.

Among the sensor information collected by the control unit 110, the data aggregation processing unit 150 performs data processing such as encoding, average waveform, and statistical conversion for the voltage waveform data. Further, the data aggregation processing unit 150 performs data processing such as acquiring sample data of the voltage waveform from the collected voltage waveform data and creating compressed data of the voltage waveform.

The data input / output unit 160 inputs information from the outside and outputs information to the outside. The control unit 110 transmits the data after data processing to the management server 200 by the data aggregation processing unit 150 via the data input / output unit 160. The control unit 110 transmits the data after data processing to the management server 200 every time a predetermined time has elapsed via the data input / output unit 160.

The various sensors 170 include a sensor for detecting the charging voltage of the ink particles, a temperature sensor for detecting the ambient temperature, a viscosity sensor for detecting the viscosity of the ink, and the like. The sensor for detecting the charging voltage of the ink particles is, for example, an auto phase sensor (phase detection sensor) provided in a gutter 14 (FIG. 2A). In the inkjet printer 100, a minute charge is charged to the ink particles that are not to be printed while shifting the timing, and the timing at which the ink particles is generated is detected by detecting the voltage at the time of collecting them by gutter. The auto phase sensor detects a signal (voltage) according to the amount of charge in the ink droplet induced by the charged ink droplet. The voltage waveform based on the signal detected by the auto phase sensor is a clean waveform like a sin wave under normal conditions, but when abnormal, the height (amplitude) of the wave is lowered, a sharp waveform (spike) is generated, or there is no amplitude at all.

FIG. 2A is a diagram for explaining a specific configuration example of the inkjet printer 100. As shown in FIG. 2A, the inkjet printer 100 includes a nozzle head 10 and a main unit 20.

The nozzle head 10 includes a nozzle 11 that ejects ink particles, an electrically charged electrode 12 that charges the ejected ink particles, a deflection electrode 13 that adds a deflection in the direction of flight of the charged ink particles, and the gutter 14 that collects ink particles that were not used for printing. The nozzle 11 is pressurized and supplied with ink by the pump 15. Further, the ink collected by the gutter 14 is also supplied to the nozzle 11 again by the pump 15. The print 16 is printed with ink particles ejected by the nozzle head 10.

The main unit 20 includes a computer 21 and a panel 22. The computer 21 includes a processor such as a CPU, a storage device (storage medium) such as a memory, an interface (IF) including a network interface, an input / output interface, and the like. The CPU is an arithmetic device that realizes each function such as the control unit 110 and the data aggregation processing unit 150 by reading and executing a program stored in the memory. The recording unit 140 is configured by a non-volatile storage device (storage medium) capable of reading and writing data.

It should be noted that the computer 21 can also be configured partly or in whole by hardware. For example, the computer 21 may realize at least a part of the functions of the control unit 110 and the data aggregation processing unit 150 using an FPGA (Field Programmable Gate Array) or the like. The data input / output unit 160 is configured by an interface (IF). The panel 22 is, for example, a touch panel. The display / input unit 120 is composed of a touch panel.

The management server 200 comprises an analysis processing unit 210, a printer information storage unit 220, an analysis model storage unit 230, a visualization unit 240, and a notification unit 250.

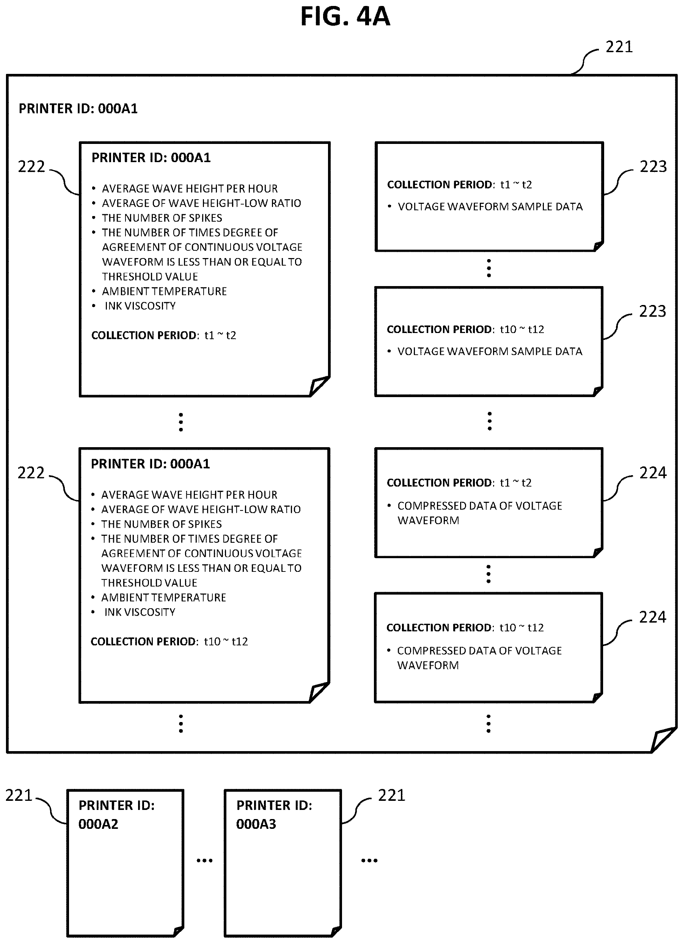

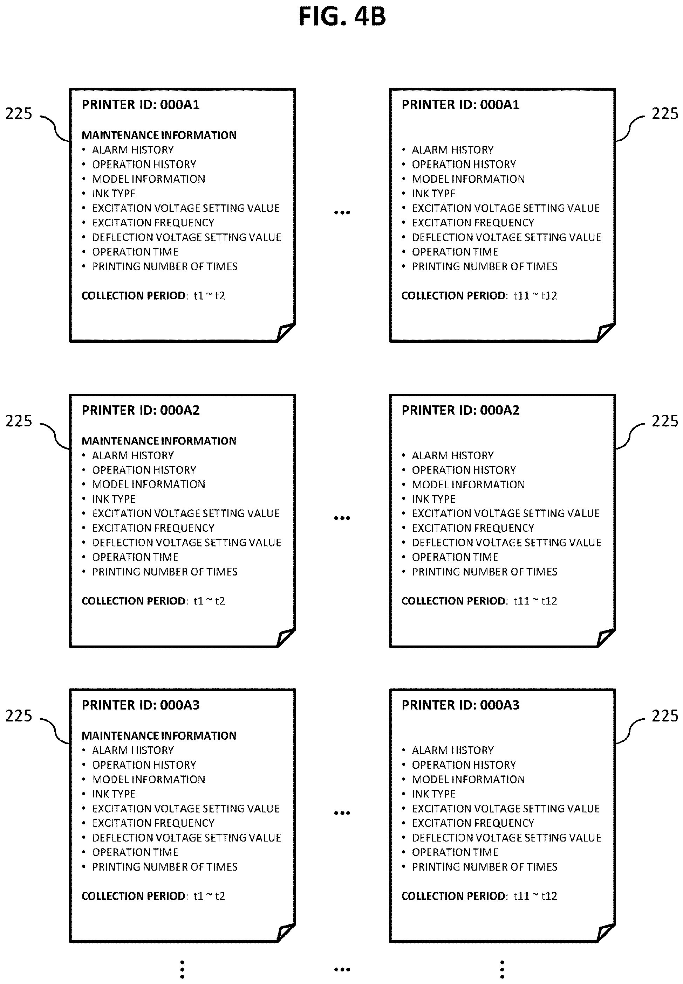

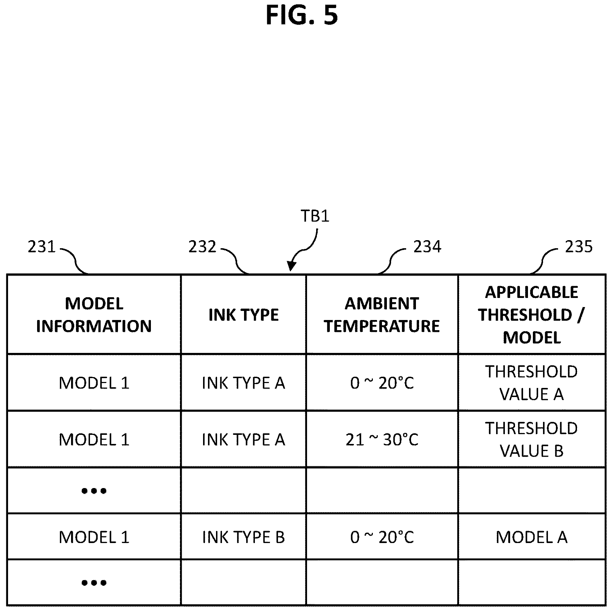

The analysis processing unit 210 uses a data set 221 (FIG. 4A) for abnormality sign analysis stored in the printer information storage unit 220, maintenance data 225 (FIG. 4B), and an analysis model threshold table TB1 (FIG. 5) stored in the analysis model storage unit 230 to perform an abnormality sign analysis that analyzes a sign (also referred to as an " abnormality sign") of deterioration of printing quality of each inkjet printer 100.

The printer information storage unit 220 stores the data set 221 (FIG. 4A) for abnormality sign analysis for each inkjet printer 100 received from each inkjet printer 100 via the network NW1 and maintenance data 225 (FIG. 4B). It should be noted that details of the abnormality sign analysis data set 221 and the maintenance data 225 will be described later.

The analysis model storage unit 230 stores a model (computation model) for determining the abnormality sign for each model, ink type, and ambient temperature of the inkjet printer 100, and an analysis model threshold table TB1 for managing threshold values used for an abnormality sign determination. It should be noted that details of the analysis model threshold table TB1 will be described later.

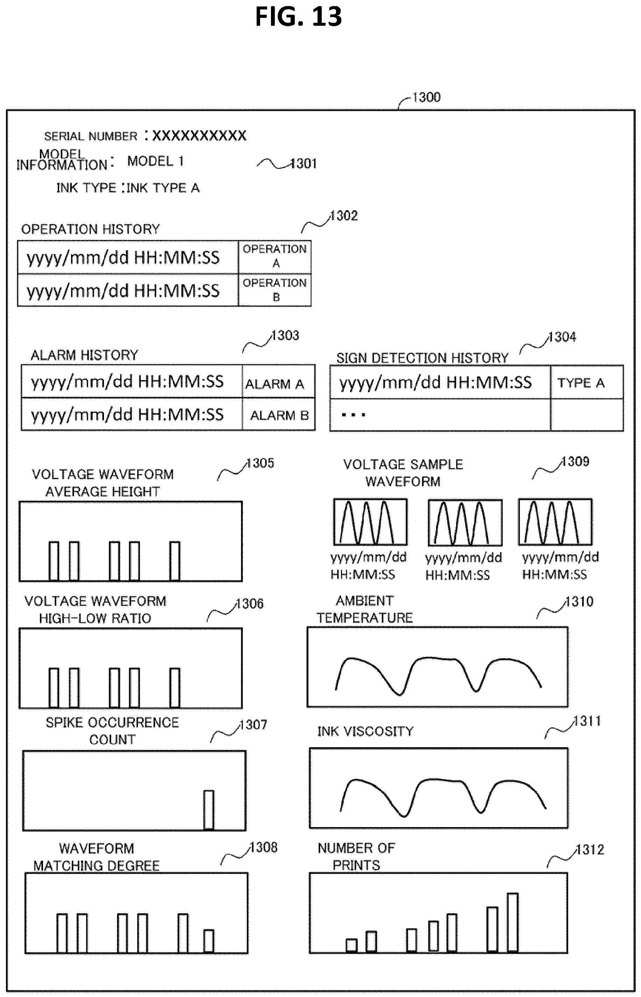

The visualization unit 240 creates, based on the results of the abnormality sign analysis and the information stored in the printer information storage unit 220, an image (for example, an abnormality sign analysis screen 1300 (FIG. 13)) for analyzing a sign of abnormalities (a sign of deterioration of printing quality) of each inkjet printer 100, outputs the image to a specific external device (display device, a terminal (user terminal) of a user, the inkjet printer 100, etc.) and causes the specific external device to display the image (for example, the abnormality sign analysis screen 1300 (FIG. 13)).

When the abnormality sign is detected, the notification unit 250 notifies an external device (for example, the inkjet printer 100, a user terminal (not shown), etc.) of the abnormality sign by an image and / or an alarm.

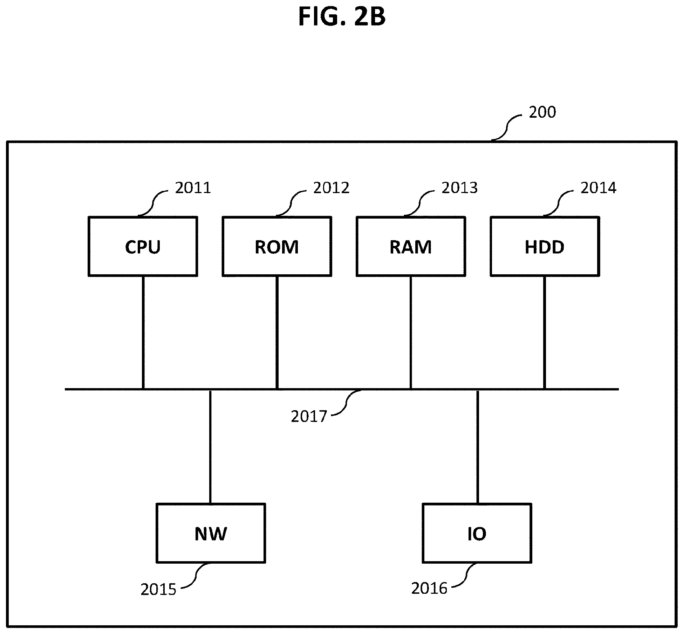

FIG. 2B is a diagram illustrating an example of the hardware configuration of the management server 200. As shown in FIG. 2B, the management server 200 includes a CPU 2011, a ROM 2012, a RAM 2013, a non-volatile storage device (HDD) 2014 that can read and write, a network interface 2015, an input / output interface 2016, and the like. They are connected communicatively with each other via bus 2017. It should be noted that the management server 200 may be configured with a plurality of servers, may be virtual servers, or may be configured with computer resources (servers, storage, etc.) on the cloud. In this example, the management server 200 is configured with computer resources on the cloud.

The CPU 2011 is an arithmetic device that realizes various functions by loading various programs not illustrated stored in the ROM 2012 and / or an HDD 2014 into the RAM 2013 and executing the programs loaded in the RAM 2013. As described above, various programs executed by the CPU 2011 are loaded into the RAM 2013, and data used by the CPU 2011 when executing various programs is temporarily stored. The ROM 2012 and / or the HDD 2014 are non-volatile storage media in which various programs are stored. The network interface 2015 is an interface for connecting the management server 200 to the network NW1. The input / output interface 2016 is an interface for connecting to an operation device such as a keyboard and a mouse and a display (display device). It should be noted that at least a part of the process performed by executing the program by the CPU 2011 may be executed by another computing device (for example, hardware such as an ASIC or FPGA). The analysis processing unit 210 and the visualization unit 240 include a program stored in the ROM 2012 and / or the HDD 2014 executed by the CPU 2011. The notification unit 250 includes a program stored in the ROM 2012 and / or the HDD 2014 executed by the CPU 2011, the network interface 2015 and / or the input / output interface 2016. The printer information storage unit 220 and the analysis model storage unit 230 are composed of the HDD 2014.

FIG. 3 is a diagram for explaining an example of the printer information 141 stored in the recording unit 140 of the inkjet printer 100 described above. The printer information 141 includes maintenance sensor data 141d including maintenance information and sensor information of the inkjet printer 100 acquired at predetermined time intervals. The maintenance sensor data 141d includes a printer ID, maintenance information, sensor information, and a collection period, which are information associated with each other.

The printer ID is identification information (ID) for identifying the inkjet printer 100. The maintenance information includes alarm history, operation history, model information, ink type, excitation voltage setting value, excitation frequency, deflection voltage setting value, operation time, and printing number of times, during the corresponding collection period. The sensor information includes time-series data of ambient temperature, time-series data of ink viscosity, and time-series data (voltage waveform data) of the charging voltage of the ink, during the corresponding collection period. The collection period includes a time range indicating the period during which the maintenance sensor data 141d was collected.

FIG. 4A is a diagram for explaining a data set 221 for abnormality sign analysis stored in the printer information storage unit 220 of the management server 200. The abnormality sign analysis data set 221 is data transmitted from each inkjet printer 100 to the management server 200 and received by the management server 200.

The abnormality sign analysis data set 221 includes a printer ID, processed sensor data 222, sample data 223, and compressed data 224, which are information associated with each other.

The printer ID is identification information (ID) for identifying the inkjet printer 100. The processed sensor data 222 includes a printer ID, an average wave height per hour during the collection period, an average of the wave height-low ratio during the collection period, the number of spikes in the collection period, the number of times the degree of agreement of the continuous voltage waveform in the collection period is less than or equal to the threshold value, time series data of ambient temperature, time series data of ink viscosity, and collection period, which are information associated with each other.

FIG. 4B is a diagram for explaining maintenance data 225 stored in the printer information storage unit 220 of the management server 200. The maintenance data 225 is data transmitted from each inkjet printer 100 to the management server 200 and received by the management server 200. The maintenance data 225 includes information associated with each other, a printer ID, maintenance information, and a collection period. The maintenance information includes alarm history, operation history, model information, ink type, excitation voltage setting value, excitation frequency, deflection voltage setting value, operation time, and printing number of times, during the corresponding collection period.

FIG. 5 is a diagram for explaining the analysis model threshold table TB1 stored in the analysis model storage unit 230 of the management server 200. The analysis model threshold table TB1 includes model information 231, ink type 232, ambient temperature 234, and application threshold / model 235 as columns (columns) for storing information (values). In the analysis model threshold table TB1, information corresponding to each column indicating an application threshold value or analysis model suitable for use for each model, ink type, ambient temperature is associated with each other and stored as information (record) in rows. Specifically, the model information 231 stores identification information (name) indicating a model. The ink type 232 contains information (ink type) indicating the ink type. The ambient temperature 234 contains a range of ambient temperatures. The applicable threshold / model 235 stores a threshold value or a computation model (analysis model).

The computation model, for example, is a computation model (machine learning model, analysis model) that has been trained to output either abnormality sign or normal status by using at least one (analysis target data) of the processed sensor data 222, sample data 223, and power waveform data restored from the compressed data 224, as input. The analysis model is, for example, a trained model trained using a neural network.

The computation model may be created using the well-known VQC (Vector Quantization Clustering). That is, to explain simply, for example, the analysis target data when no abnormality sign is occurring (normal state) is used as training data, a cluster with a radius r1 that includes the analysis target data when no abnormality sign is occurring is created through machine learning, the distance r2 from the center of the cluster is calculated when the input analysis target data is plotted within the cluster region, and the computation model is created that outputs either abnormality sign or normal status based on this calculated distance r2.

When the analysis target is entered, the created computation model searches for the closest cluster to the analysis target and calculates the distance (distance r2) between the found cluster and the analysis target data. The larger the distance r2 to the cluster, the more likely it is that an abnormality sign has occurred, and the smaller the distance r2 from the cluster, the less likely it is that an abnormality sign has occurred, and an abnormality sign or normal (whether or not an abnormality sign has occurred) is output based on the distance r2 (for example, by comparing the distance r2 with the cluster with a predetermined threshold value, etc.).

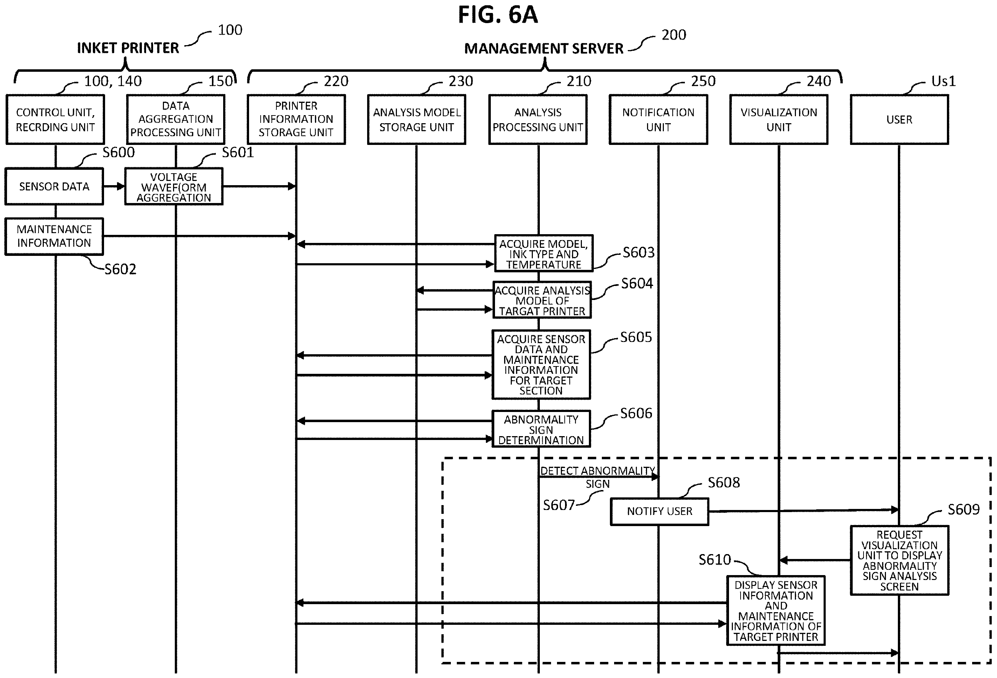

FIG. 6A is a sequence diagram for explaining the operation of the IJP system and the operation of the user Us1.

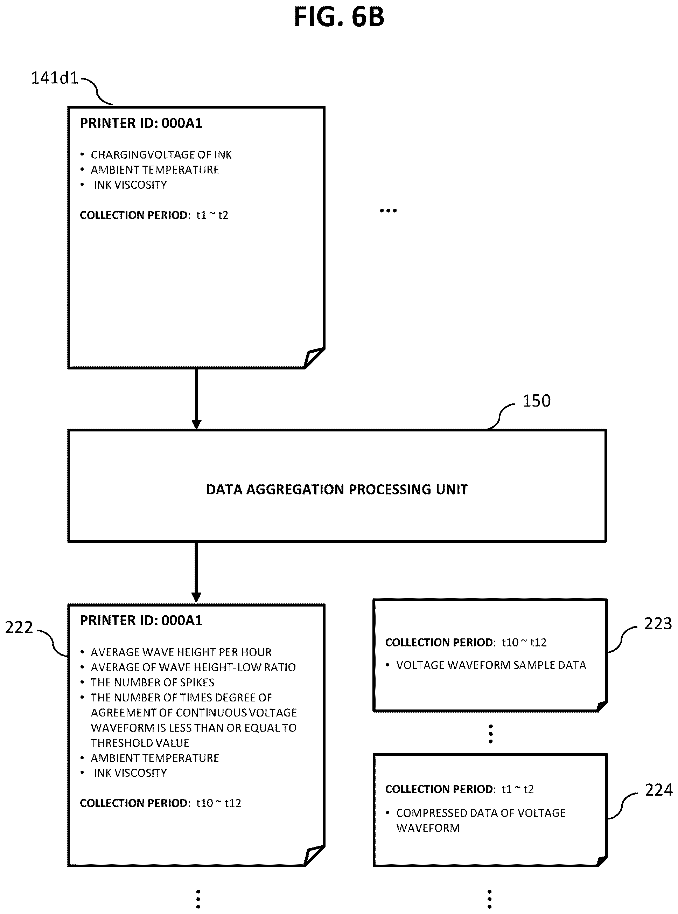

S600: The control unit 110 transmits the sensor data 141d1 (FIG. 6B) stored in the recording unit 140 to the data aggregation processing unit 150.

S601: The data aggregation processing unit 150 processes the sensor data 141d1 and transmits the processed data (the processed sensor data 222, the sample data 223, and the compressed data 224 (FIG. 6B)) to the management server 200. It should be noted that this data processing will be described later. Upon receiving the processed data, the management server 200 stores it in the printer information storage unit 220 as a data set 221 for abnormality sign analysis.

S602: The control unit 110 transmits the maintenance data 225 stored in the recording unit 140 to the management server 200. When the management server 200 receives the maintenance data 225, it stores it in the printer information storage unit 220.

S603: The analysis processing unit 210 refers to the abnormality sign analysis data set 221 and the maintenance data 225 of the inkjet printer 100 to be analyzed stored in the printer information storage unit 220 to acquire a model of the inkjet printer 100 to be analyzed and processed, ink type, and temperature (ambient temperature).

S604: The analysis processing unit 210 refers to the analysis model threshold table TB1 stored in the analysis model storage unit 230 to acquire a threshold value and a computation model corresponding to the model, ink type, and temperature of the inkjet printer 100 to be analyzed and processed.

S605: The analysis processing unit 210 acquires sensor data (data set 221 for abnormality sign analysis) and maintenance information (maintenance data 225) of the analysis target section (time section) of the inkjet printer 100 to be analyzed from the printer information storage unit 220.

S606: The analysis processing unit 210 performs an abnormality sign determination (abnormality sign detection) using the threshold value and analysis model acquired at S604 and the sensor data (data set 221 for abnormality sign analysis) of the analysis target section acquired at S605.

S607: The analysis processing unit 210 detects the abnormality sign as a result of the abnormality sign detection.

S608: The analysis processing unit 210 notifies a user Us1 that the abnormality sign has been detected by transmitting a notification of the abnormality sign detection to the user terminal of the user Us1.

S609: When the user Us1 receives a notification of the abnormality sign detection, the user Us1 requests the visualization unit 240 to display the abnormality sign analysis screen 1300 created by the visualization unit 240.

S610: The visualization unit 240 displays an abnormality sign analysis screen (FIG. 13) including information on sensor information and maintenance information about the inkjet printer 100 to be analyzed on a display of the terminal of the user Us1. It should be noted that details of the example of the abnormality signs analysis screen 1300 will be described later. The user Us1 confirms the abnormality sign analysis screen 1300, and can isolate (analyze) the cause of the abnormality sign by looking at information on sensor information and maintenance information.

FIG. 6B is a diagram for explaining the data processing of S601 described above. The data aggregation processing unit 150 acquires sensor data 141d1 included in the maintenance sensor data 141d stored in the recording unit 140. The sensor data 141d1 includes a printer ID, time-series data (voltage waveform data) of the charging voltage of the ink, time-series data of the ambient temperature, time-series data of the viscosity of the ink, and a collection period. The data aggregation processing unit 150 performs data processing (aggregation, statistics, encoding, compression, processing, etc.) on the sensor data 141d1 to generate the processed sensor data 222, the sample data 223, and the compressed data 224 and outputs them the data input/output unit 160. The processed sensor data 222 includes data processed into data in which the sensor data 141d1 represents the characteristics of the voltage waveform necessary for detecting the abnormality sign. By processing the sensor data 141d1 into such data, it can be converted into a feature amount necessary for predictive detection while reducing the amount of data.

The compressed data 224 is created by encoding voltage waveform data and compressing it with a predetermined compression method (for example, dictionary compression). As a result, the amount of data can be reduced while suppressing the information loss of the power waveform data. It should be noted that the compressed data 224 may only be compressed without encoding.

The processed sensor data 222, the sample data 223, and the compressed data 224 are transmitted from the data input / output unit 160 to the management server 200 via the network NW1, and are stored (retained, stored) in the printer information storage unit 220 as a data set 221 for abnormality sign analysis. The compressed data 224 is used when creating a data set 221 for abnormality sign analysis by being thawed. When the compressed data 224 has been encoded, the decoding process is also performed at the time of decompression.

In this way, the amount of sensor data 141d1 collected in the cloud is reduced by performing data processing by the data aggregation processing unit 150. This can reduce cloud storage costs and mobile line costs.

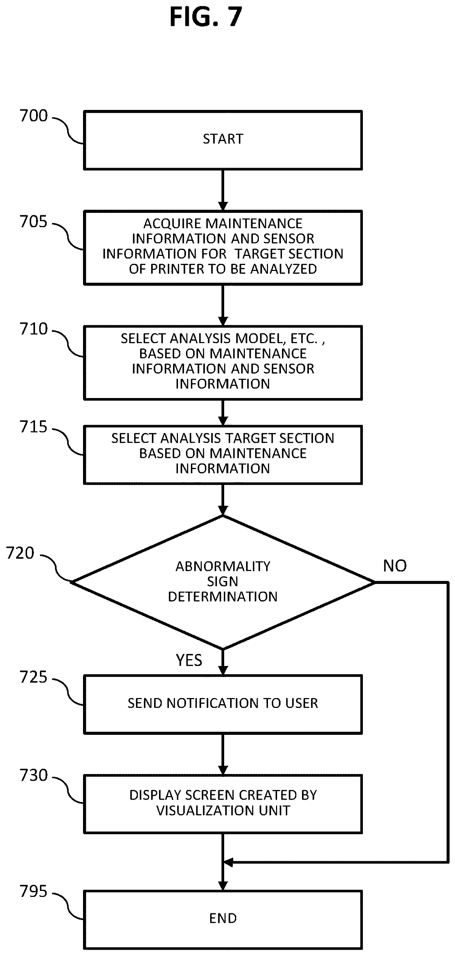

FIG. 7 is a flowchart showing a process flow executed by the analysis processing unit 210. The analysis processing unit 210 starts processing from step 700 in FIG. 7, executes the processes of steps 705 to 715 described below, and then proceeds to step 720.

Step 705: The analysis processing unit 210 acquires maintenance information (maintenance data 225) and sensor information (data set 221 for abnormality sign analysis) of the analysis target section (time section) of the analysis target section (time section) of the inkjet printer 100 to be analyzed from the printer information storage unit 220.

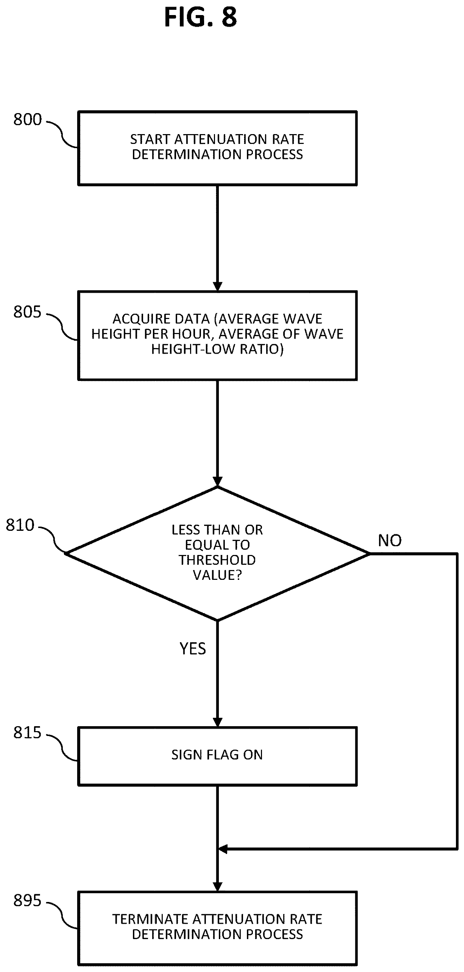

Step 710: The analysis processing unit 210 refers to the analysis model threshold table TB1 and selects (acquires) a model used for determination in FIGS. 8 to 11 described later, analysis model and threshold value for each ink type and ambient temperature based on the maintenance information (maintenance data 225) and the sensor information (data set 221 for abnormality sign analysis). Thereby, since the model and threshold value of the sign detection can be changed according to the customer environment, the accuracy of the sign detection can be improved.

Step 715: The analysis processing unit 210 selects an analysis target section based on the maintenance information (maintenance data 225). For example, since the behavior of the voltage changes drastically when the analysis processing unit 210 uses the acquired maintenance information (maintenance data 225) and has an operation history such as replacement of ink, complementary solution, and parts, the analysis processing unit 210 selects an analysis target section so that the time series data (processed sensor data 222) of the corresponding section (corresponding time section) is excluded from the target of abnormality sign detection. Additionally, the analysis processing unit 210 uses the acquired maintenance information (maintenance data 225), alarm has already been displayed on the inkjet printer 100, and the printing disorder is self-evident when an abnormality such as excessive charge or no charge that indicates a disturbance in the printing state in the alarm history, and there is no need to notify the user. Therefore, the time series data (processed sensor data 222) of the section having such an alarm history is selected for analysis so as to exclude it from the target of abnormality sign detection. Thereby, the effect of a charge voltage change caused by a factor other than a disturbance in print quality can be excluded, and the detection accuracy can be improved. It should be noted that if there is no operation history such as ink, support solution, parts replacement, etc. in the analysis target section, and if an alarm has not occurred, the analysis target section is selected as it is without excluding the section from the analysis target section.

When the analysis processing unit 210 proceeds to step 720, it performs an abnormality sign determination. It should be noted that details of the abnormality sign determination will be described later.

When no sign of abnormality is detected as a result of the abnormality sign determination, the analysis processing unit 210 makes a "NO" determination at step 720 and proceeds to step 795 to temporarily terminate the processing flow.

When the abnormality sign is detected as a result of the abnormality sign determination, the analysis processing unit 210 makes a "YES" determination at step 720, executes the processes of step 725 and step 730 described below in order, and then proceeds to step 795 and temporarily terminates the processing flow.

Step 725: The analysis processing unit 210 notifies the user Us1 the abnormality sign by transmitting an abnormality sign notification to the user terminal of the user Us1 or the like by the notification unit 250.

Step 730: In response to a request from the user terminal or the like, the analysis processing unit 210 displays a screen (the abnormality sign analysis screen 1300 (FIG. 13)) created by the visualization unit 240 on the display of the user terminal or the panel 22 (display) of the inkjet printer 100. It should be noted that the user Us1 can check the screen displayed on the display, compare it with the sensor data and maintenance information, and analyze (isolate) the cause of the abnormality sign.

Details of the above-described abnormality sign determination will be described. The above-described abnormality sign determination is performed by executing the process flow shown by the flowchart in FIGS. 8 to 12.

FIG. 8 is a flowchart showing a process flow of the attenuation rate determination process executed by the analysis processing unit 210. When the analysis processing unit 210 proceeds to step 720 of FIG. 7, the analysis processing unit 210 starts the attenuation rate determination process from step 800 of FIG. 8 and proceeds to step 805 to acquire the average of the wave height per hour and the average of the wave heigh-low ratio in the selected analyzed section.

Thereafter, the analysis processing unit 210 proceeds to step 810 to determine whether or not the average of the wave height per time is less than or equal to the threshold value, and determines whether or not the average of the wave height-low ratio is less than or equal to the threshold value. It should be noted that the threshold value acquired at step 710 of FIG. 7 is used for this threshold.

When the determination result is at least one of the result that the average wave height per hour is less than or equal to the threshold value, and the result that the average of the wave height-low ratio is less than or equal to the threshold value, since the wave height of the voltage waveform is attenuated from the normal state, it can be judged that there is a high possibility that the abnormality sign (a sign of deterioration of print quality) has occurred. Therefore, in this case, the analysis processing unit 210 makes a "YES" determination at step 810 and proceeds to step 815, sets the sign flag to the "ON" state, and then proceeds to step 895 to complete the attenuation rate determination process. It should be noted that the sign flag is reset before the determination is executed. Therefore, before the determination is executed, the sign flag is set to the "OFF" state.

On the other hand, when the determination result is that the average of the wave height per hour is greater than the threshold value and the average of the wave height-low ratio is greater than the threshold value, it can be judged that there is a high possibility that it is normal. Therefore, in this case, the analysis processing unit 210 makes a "NO" determination at step 810 and proceeds directly to step 895 to complete the attenuation rate determination process.

It should be noted that as a method of determining step 810 in Fig. 7, it also includes a method of determining "YES" if the attenuation width compared to the past wave heigh is greater than or equal to the threshold value by observing the time variation of wave height.

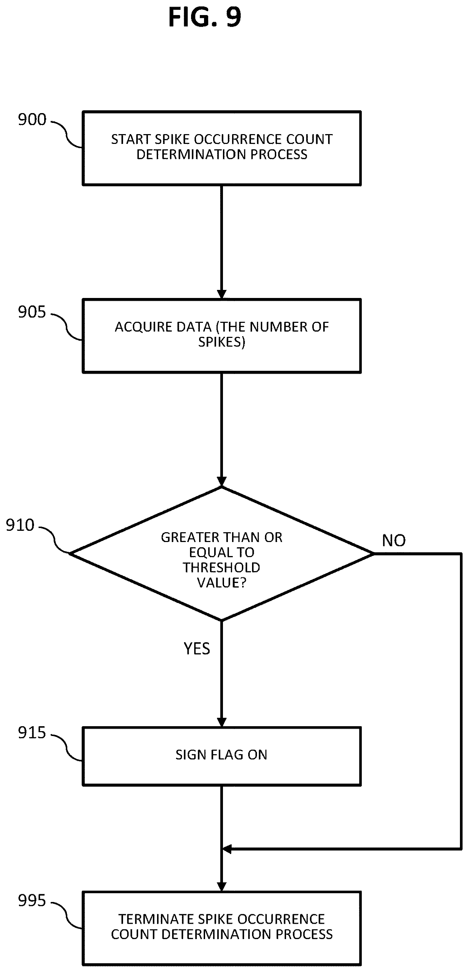

FIG. 9 is a flowchart showing a process flow for spike occurrence count determination process executed by the analysis processing unit 210. When the analysis processing unit 210 proceeds to step 720 of FIG. 7, the analysis processing unit 210 starts the spike occurrence count determination process from step 900 of FIG. 9 and proceeds to step 905, and acquires the number of spikes occurred in the selected analysis target section.

Thereafter, the analysis processing unit 210 proceeds to step 910 to determine whether or not the number of spikes occurred is greater than or equal to the threshold value. It should be noted that the threshold value acquired at step 710 of FIG. 7 is used for this threshold value.

When the number of spikes is greater than or equal to the threshold value, it can be judged that there is a high possibility that the abnormality sign has occurred because many sharp waveforms are generated in the voltage waveform. Therefore, in this case, the analysis processing unit 210 makes a "YES" determination at step 910 and proceeds to step 915, sets the sign flag to the "ON" state, and then proceeds to step 995 to complete the spike occurrence count determination process. It should be noted that the sign flag is reset before the determination is executed. Therefore, before the determination is executed, the sign flag is set to the "OFF" state.

On the other hand, when the number of spikes is less than the threshold value, it can be judged that there is a high possibility that it is normal. Therefore, in this case, the analysis processing unit 210 makes a "NO" determination at step 910 and proceeds directly to step 995 to terminate the spike occurrence count determination process.

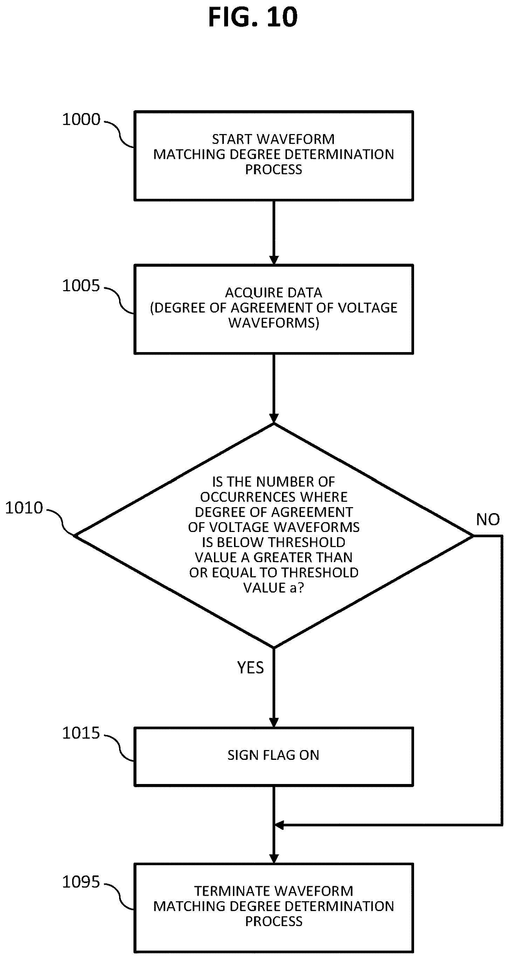

FIG. 10 is a flowchart showing a process flow for waveform matching determination process. When the analysis processing unit 210 proceeds to step 720 of FIG. 7, the analysis processing unit 210 starts the waveform matching determination process from step 1000 of FIG. 10 and proceeds to step 1005 to acquire the degree of agreement of successive voltage waveforms in the selected analyzed section.

Thereafter, the analysis processing unit 210 proceeds to step 1010 to determine whether or not the number of occurrences in which the degree of agreement of the consecutive voltage waveforms is less than or equal to the threshold value A is greater than or equal to the threshold value a. It should be noted that the threshold value acquired at step 710 of FIG. 7 is used for the threshold value A and the threshold value a.

When the number of occurrences in which the degree of agreement of consecutive voltage waveforms is less than or equal to the threshold value A is equal to or greater than the threshold a, it can be judged that there is a high possibility that the abnormality sign has occurred. Therefore, in this case, the analysis processing unit 210 makes a "YES" determination at step 1010 and proceeds to step 1015, sets the sign flag to the "ON" state, and then proceeds to step 1095 to complete the waveform matching determination process. It should be noted that the sign flag is reset before the determination is executed. Therefore, before the determination is executed, the sign flag is set to the "OFF" state.

On the other hand, the number of occurrences in which the degree of agreement of consecutive voltage waveforms is less than or equal to the threshold value A is less than the threshold value a, it can be judged that there is a high possibility that it is normal. Therefore, in this case, the analysis processing unit 210 makes a "NO" determination at step 1010 and proceeds directly to step 1095 to complete the waveform matching determination process.

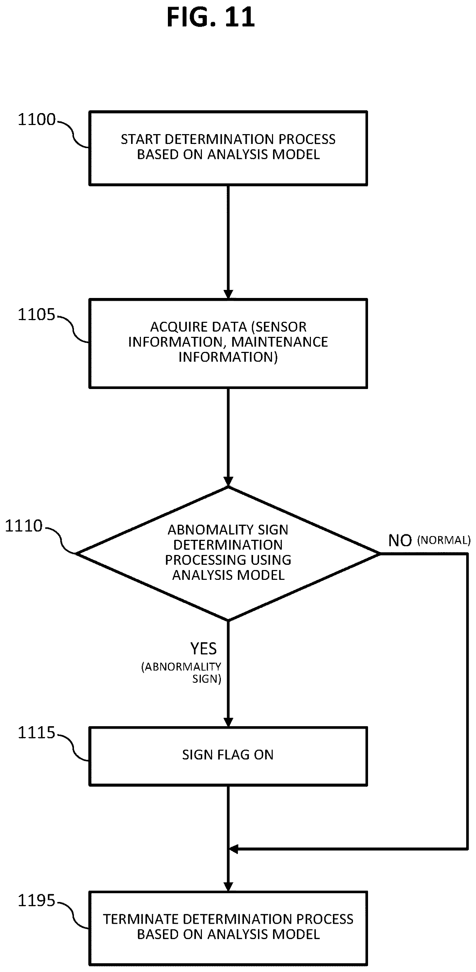

FIG. 11 is a flowchart showing a processing flow of a determination process by an analysis model executed by the analysis processing unit 210. When proceeding to step 720 in FIG. 7, the analysis processing unit 210 starts the determination process by the analysis model from step 1100 of FIG. 11 and proceeds to step 1105 to acquire sensor information and maintenance information (analysis target data used for analysis model) for the selected analysis target section.

Thereafter, the analysis processing unit 210 proceeds to step 1110 and performs abnormality determination processing in the analysis model using the analysis target data used for the analysis model. It should be noted that the analysis model acquired at step 710 of FIG. 7 is used for this analysis model.

When the result of the abnormality determination process in the analysis model is the abnormality sign, it can be judged that there is a high possibility that the abnormality sign has occurred. Therefore, in this case, the analysis processing unit 210 makes a "YES (abnormality sign)" determination at step 1110 and proceeds to step 1115, sets the sign flag to the "ON" state, and then proceeds to step 1195 to complete the determination process according to the analysis model.

On the other hand, when the result of the abnormality determination process in the analysis model is normal, it can be judged that there is a high possibility that it is normal. Therefore, in this case, the analysis processing unit 210 makes a "NO (normal)" determination at step 1110 and proceeds directly to step 1195 to terminate the determination process by the analysis model.

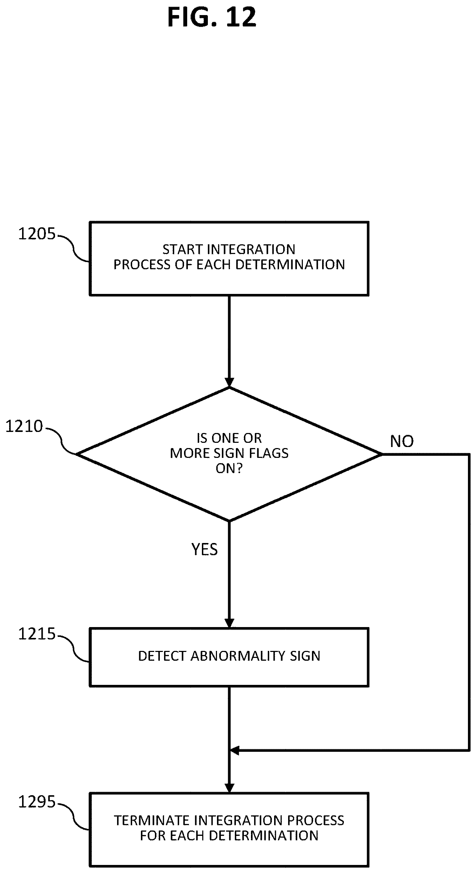

FIG. 12 is a flowchart showing a processing flow of the integration process of each determination executed by the analysis processing unit 210. When each determination process of FIGS. 8 to 11 is completed, the analysis processing unit 210 starts processing from step 1200 of FIG. 12 and proceeds to step 1205 to determine whether or not there are one or more sign flags in the "ON" state for each sign flag of each determination process.

When there are one or more sign flags in the "ON" state, the analysis processing unit 210 makes a "YES" determination at step 1205 and proceeds to step 1210 to detect the abnormality sign by determining that the abnormality sign has occurred, and proceeds to step 1295 to temporarily complete the integration process of each determination.

When there is no sign flag in the "ON" state (that is, all are "OFF"), the analysis processing unit 210 makes a "NO" determination at step 1205 and proceeds to step 1295 to terminate the integration process of the determination temporarily.

It should be noted that the process of step 1205 of FIG. 12 may be a process for determining whether or not all of the sign flags of each determination process are in the "ON" state. In this case, when all of the sign flags of each determination process are in the "ON" state, the analysis processing unit 210 detects the abnormality sign by determining that the abnormality sign has occurred.

FIG. 13 is a diagram for explaining an example of the abnormality sign analysis screen 1300 displayed by the visualization unit 240 on the display device (display). As shown in FIG. 13, the abnormality sign analysis screen 1300 includes printer information 1301, operation history 1302, alarm history 1303, predictive detection history 1304, voltage waveform average height 1305, voltage waveform high-low ratio 1306, the number of spikes 1307, waveform matching degree 1308, voltage sample waveform 1309, ambient temperature 1310, ink viscosity 1311, and the number of prints 1312.

The printer information 1301 includes an image (character) indicating information about the printer, such as the printer's serial number.

The operation history 1302 includes an image (table) showing the operation history of the inkjet printer 100. The alarm history 1303 includes an image (table) indicating an alarm history issued by the inkjet printer 100. The sign detection history 1304 includes an image (graph) showing the detection history of the abnormality sign of the inkjet printer 100. The voltage waveform average height 1305 includes an image (graph) showing time series data of the average height of the wave of the voltage waveform. The voltage waveform high-low ratio 1306 includes an image (graph) showing time series data of the wave high-low ratio of the voltage waveform.

The number of spikes 1307 includes an image (graph) showing time series data of the number of spikes occurred. The waveform matching degree 1308 includes an image (graph) showing time series data of the waveform matching degree. The voltage sample waveform 1309 includes an image (graph) showing a voltage sample waveform and a sample waveform acquisition time. The ambient temperature 1310 includes an image (graph) showing time series data of the ambient temperature. The viscosity of the ink 1311 includes an image (graph) showing time-series data of the viscosity of the ink. The number of prints 1312 includes an image (graph) showing time-series data of the number of printings.

After receiving the notification, the user Us1 can refer to the sensor information and maintenance information included in the abnormality sign analysis screen 1300 created by the visualization unit 240 and displayed on the display, and can isolate the cause of the abnormality. The following is an example of how to utilize sensors and maintenance information.

For example, when ink or complementary fluid is replaced, the print head is cleaned, parts are replaced, or the excitation voltage setting is changed, the voltage behavior changes significantly. When such a maintenance operation appears to be a factor in the notification, there is no need to perform preventive maintenance.

For example, if the ambient temperature is confirmed from the abnormality sign analysis screen 1300 displayed by the visualization unit 240 and the high temperature continues for several days, it can be estimated that the cause is that the ink condition has deteriorated.

For example, if the viscosity value of the ink rises or decreases significantly at the same time as the abnormality of the voltage waveform, it can be estimated that the cause of the abnormality is an abnormality in viscosity control inside the device or a deterioration in the condition of the ink.

For example, if it can be confirmed that the change in the voltage waveform is caused by a specific event by matching the operation history with the change in the voltage waveform (for example, cleaning has not been done for a long time), it is possible to instruct the maintenance operation to be improved.

### <Effect>

As described above, the IJP system according to the embodiment of the present invention can detect the sign of deterioration of printing quality using data specific to the inkjet printer 100 such as the charging state of the ink (for example, the charging voltage of the ink). Furthermore, the IJP system can both reduce the data size for collecting sensor information in the cloud and improve the sign detection accuracy.

### <<Modification>>

The present invention is not limited to the above embodiments, and various modifications can be employed within the scope of the present invention.

In the above embodiment, although it is not realistic considering communication costs, instead of performing the data processing on the inkjet printer 100 side, the maintenance sensor data 141d may be sequentially sent to the management server 200, and data processing executed by the data aggregation processing unit 150 described above may be performed on the cloud side. Even in this case, data peculiar to the inkjet printer 100 such as the charging state of the ink (for example, the charging voltage of the ink) can be used to detect the sign of deterioration of printing quality.

In the above embodiment, in addition to the inkjet printer 100 side, data processing executed by the data aggregation processing unit 150 described above may also be performed on the cloud side. Even in this case, data peculiar to the inkjet printer 100 such as the charging state of the ink (for example, the charging voltage of the ink) can be used to detect the sign of deterioration of printing quality.

In the above embodiment, the post-processing data may be at least one of the average wave height per hour, the average of the wave height-low ratio, the number of spikes, the number of times the waveform matching degree of the consecutive voltage waveforms is less than or equal to the threshold value, voltage waveform sample data, and voltage waveform compression data. In the above embodiment, the post-processing data may be data representing the characteristics of other voltage waveform data other than the above-described data as long as it is data representing the characteristics of the voltage waveform data. In the above embodiment, the abnormality sign may be detected by the abnormality sign determination based on data representing the characteristics of other voltage waveform data.

In the above embodiment, at least one of the determination processes of FIGS. 8 to 11 may be executed.

### Reference Signs List

- 100:: inkjet printer
- 110:: control unit
- 120:: display / input unit
- 130:: printing unit
- 140:: recording unit
- 150:: data aggregation processing unit
- 160:: data input / output unit
- 170:: various sensors
- 200:: management server
- 210:: analysis processing unit
- 220:: printer information storage unit
- 230:: analysis model storage unit
- 240:: visualization unit
- 250:: notification unit
- NW1:: network

## Claims

1. An inkjet printer system comprising:
an inkjet printer; and
a management server communicatively connected to the inkjet printer via a network,
wherein
the management server:
collects time-series data of ink charging voltage or processed data acquired after processing the time-series data of the ink charging voltage in the inkjet printer from the inkjet printer; and
detects an abnormality sign, which are precursors to print quality deterioration, based on at least one of the processed data acquired by processing the time-series data of the ink charging voltage by the management server and the processed data acquired from the inkjet printer.

2. The inkjet printer system according to claim 1,
wherein
the inkjet printer creates the processed data by processing the time-series data of the ink charging voltage and sends the processed data to the management server; and
the management server receives the processed data from the inkjet printer and detects the abnormality sign, which are precursors to the print quality deterioration, based on the processed data.

3. The inkjet printer system according to claim 2,
wherein
the management server includes a storage device capable of storing data; and
the management server:
stores the processed data received from the inkjet printer in the storage device;
acquires the data necessary for detecting the abnormality sign in an analysis target section from the processed data stored in the storage device; and
detects the abnormality sign, which are precursors to the print quality deterioration, by making determinations based on the data necessary for detecting the abnormality sign.

4. The inkjet printer system according to claim 2,
wherein
the processed data includes at least one of:
the average wave height per unit time;
the average wave height-low ratio;
the number of spike occurrences;
the number of times the matching degree of consecutive voltage waveforms is below a threshold value;
sample data of voltage waveforms; and
compressed data of voltage waveforms.

5. The inkjet printer system according to claim 4,
wherein
the compressed data of the voltage waveforms is created by dictionary compression of encoded voltage waveforms.

6. The inkjet printer system according to claim 4,
wherein
the management server detects the abnormality sign by making at least one determination based on:
the degree of attenuation of power waveforms determined from the average wave height per unit time and the average wave height ratio;
the number of times the spike occurrences are below a threshold value;
the number of times the matching degree of consecutive voltage waveforms is below a threshold value; and
a computation model capable of determining the abnormality sign.

7. The inkjet printer system according to claim 3,
wherein
the inkjet printer sends maintenance information of the inkjet printer to the management server; and
the management server:
receives the maintenance information from the inkjet printer;
stores the received maintenance information in the storage device; and
excludes a corresponding time section from the analysis target section for detecting the abnormality sign when there is an operation history of specific tasks or a specific alarm has occurred based on the maintenance information.

8. The inkjet printer system according to claim 6,
wherein
the inkjet printer sends maintenance information and ambient temperature; and
the management server:
receives the maintenance information and the ambient temperature from the inkjet printer; and
modifies conditions and the computation model used for determining the abnormality sign based on the maintenance information and the ambient temperature.

9. The inkjet printer system according to claim 2,
wherein
the management server notifies a specific external device of the abnormality sign when detected.

10. The inkjet printer system according to claim 2, the inkjet printer system comprising a display device capable of displaying images,
wherein
the inkjet printer sends maintenance information, ambient temperature, and ink viscosity to the management server; and
the management server:
receives the maintenance information, the ambient temperature, and the ink viscosity from the inkjet printer;
includes a storage device capable of storing data;
stores the history of an abnormality sign detection, the processed data received from the inkjet printer, the maintenance information, the ambient temperature, and the ink viscosity in the storage device;
creates, based on the history of the abnormality sign detection, the processed data, the maintenance information, the ambient temperature, and the ink viscosity stored in the storage device, an abnormality sign analysis screen containing information for analyzing the detected abnormality sign, and
displays the abnormality sign analysis screen on the display device.

11. The inkjet printer system according to claim 2,
wherein
the management server is configured using cloud-based computer resources.

12. A method for detecting an abnormality sign in an inkjet printer using an inkjet printer and a management server communicatively connected to the inkjet printer via a network, the method comprising:
collecting time-series data of ink charging voltage or processed data acquired after processing the time-series data of the ink charging voltage in the inkjet printer from the inkjet printer by the management server, and
detecting the abnormality sign, which are precursors to print quality deterioration, based on at least one of the processed data acquired by processing the time-series data of the ink charging voltage by the management server and the processed data acquired from the inkjet printer.

13. The inkjet printer used in the inkjet printer system according to claim 2.
